# EUROPÄISCHE PATENTANMELDUNG

(11) **EP 2 755 099 A1**
(43) Veröffentlichungstag der Anmeldung: **16.07.2014**
(21) Anmeldenummer: 13401128.7
(22) Anmeldetag: 05.12.2013
(51) Int. Cl.: G05B 23/02

(54) **Anzeigevorrichtung mit zumindest einer Anzeigefläche**

(30) Priorität: 10.12.2012 DE 102012111995; 20.06.2013 DE 102013106430
(71) Anmelder: Amazonen-Werke H. Dreyer GmbH & Co. KG, 49205 Hasbergen (DE)
(72) Erfinder: Große Brinkhaus, Andre, 48149 Münster (DE); Köcher, Michael, 49205 Hasbergen (DE); Kötter, Heiner, 49086 Osnabrück (DE)

(57) **Zusammenfassung**

Anzeigevorrichtung mit zumindest einer Anzeigefläche (4) zum Anzeigen von Maschineninformationen einer Maschine, insbesondere einer landwirtschaftlichen Arbeitsmaschine, welche bedarfsweise zumindest teilweise als kodierte und visuell lesbare Information angezeigt wird und mittels einer Leseeinrichtung erkannt, ausgelesen und in verständlicher Weise auf einer Anzeigefläche angezeigt wird.

## Beschreibung

Die Erfindung betrifft eine Anzeigevorrichtung mit zumindest einer Anzeigefläche.

In der Praxis sind bereits Anzeigevorrichtungen zum Darstellen von Maschineninformationen in landwirtschaftlichen Fahrzeugen bekannt. Dieses wird beispielsweise durch das normierte ISOBUS-System realisiert, wobei ein virtueller Terminal die Schnittstelle zwischen Anwender und Maschine darstellt. Der virtuelle Terminal besteht aus einem anzeigefähigen Bildschirm, der durch Druck- und/oder Drehknöpfe bedient werden kann oder einem integriert ausgebildeten Touchscreen, der auf Berührung des Bildschirmfeldes reagiert. Über das ISOBUS-System ist der Terminal mit dem landwirtschaftlichen Fahrzeug, sowie dem angefügten Arbeitsgerät verbunden und kommuniziert zwischen beiden Kontrolleinheiten. Soll- und/oder Istwerte der Kontrolleinheiten werden auf dem Terminal als eine entsprechende Bedienermaske dargestellt und verändern sich bei spezifischen Parameterabweichungen der kontrollierten Maschine. Eine zu starke Abweichung der Kontrollparameter verursacht ein Erscheinen einer Alarmmaske und der aufgetretene Fehler wird angezeigt.

Bei den derzeitig auf dem Markt befindlichen Terminals wird auf dem Bildschirm nur eine Fehlermeldung dargestellt. Damit nun der Maschinenbediener diesen aufgetretenen Fehler weiter analysieren bzw. beheben kann, sind weitere Informationen notwendig. Allerdings weisen die meisten Terminals ungenügende Speicherkapazitäten auf, um alle benötigten Hinweise zu der angezeigten Fehlermeldung zu enthalten.

Der Erfindung liegt die Aufgabe zu Grunde, in die Anzeigeeinrichtung Voraussetzungen für die ausreichende zur Verfügungsstellung von Informationen zu integrieren.

Die Aufgabe wird erfindungsgemäß durch die Merkmale des Anspruches 1 gelöst. Hierbei wird auf der Anzeigefläche einer Anzeigevorrichtung, Informationen einer landwirtschaftlichen Maschine, als teilweise kodierte und visuell lesbare Schrift automatisch oder manuell aufgerufen und mittels einer Leseeinrichtung erkannt, ausgelesen und in verständlicher Weise auf einer Anzeigefläche dargestellt.

Vorteilhaft ist dabei, dass auf den meisten heutigen landwirtschaftlichen Arbeitsmaschinen ein Terminal installiert ist, der in Verbindung zur Maschine steht und alle wichtigen Parameter über diesen Terminal verarbeitet werden. Kommt es demzufolge zum Beispiel zu Komplikationen mit der Arbeitsmaschine, wird auf der Anzeigefläche des Terminals eine Maske mit einem zugehörigen verschlüsselten Fehlermuster angezeigt. Auch ein manueller Abruf von einer entsprechenden Maske lässt sich aktivieren und so können auch Bedienungsanleitung, Wartungshinweise, etc. angezeigt werden.

Das verschlüsselte Muster wird durch eine lesbare Information in eindimensionaler- und/oder zweidimensionaler lesbarer Schrift ausgestaltet und angezeigt.

In der ausgebildeten Ausführungsform handelt es sich bei den lesbaren Informationen um einen sogenannten QR-Code. QR-Codes (quick response = schnelle Antwort) sind als zweidimensionales Matrixmuster aufgebaut, die durch helle und dunkle Pixel bzw. Linien ausgestaltet sind. Diese Codes beinhalten digitale codierte Informationen, wie beispielsweise Internetadressen, Kontaktdaten, Geo-Daten, Texte, Telefonnummern, etc.

Solche verschlüsselten Muster werden durch eine Lesevorrichtung, wie beispielsweise in heutigen Smartphones, Tablets, Notebooks, etc. oder dem Benutzerendgerät, zum Beispiel Terminal, erfasst.

Die Lesevorrichtung ist mit einer optischen Texterkennung und/oder Grafikerkennung, beispielsweide durch Kamera, Scanner, etc., ausgebildet.

Die Leseeinrichtung weist einen vorzugsweisen integrierten Speicher auf, der ein Programm zur Entschlüsselung beinhaltet und das aufgezeigte Muster in eine für den Anwender lesbare Form, wie beispielsweise eine Internetadresse umwandelt.

Über die im verschlüsselten Muster hinterlegte Internetadresse kann das Lesegerät mit Hilfe einer Datenverbindung aufgenommene Daten versenden und empfangen.

Die aufgenommenen Daten aus einer Datenbank sind mit entsprechenden Informationen, wie beispielsweise Hinweise zur Fehlerbehebung, Wartungsanleitung, Bedienungsanleitung, Einstellhinweise, etc. hinterlegt.

Die Datenbank kann sich an einem anderen Standort, wie beispielsweise Web-Server befinden oder aber auch integriert in dem Terminal und/oder Smartphone befindet.

Die abgerufenen Maschineninformationen werden über die Internetverbindung zurück an den Anwender gesendet.

Die Maschineninformationen werden in Textform und/oder Grafikform auf dem Lesegerät oder Terminal optisch dargestellt.

Weitere Einzelheiten der Erfindung sind den übrigen Unteransprüchen, der Beispielbeschreibung und den Zeichnungen zu entnehmen. Hierbei zeigen
- Fig.1: eine schematische Darstellung des erfindungsgemäßen Auslesens von Informationen einer Anzeigevorrichtung mittels eines mobilen Lesegerätes zum Anzeigen von Maschineninformationen;
- Fig.2: eine schematische Darstellung des Auslesens der Information mittels mobilen Lesegerätes von der Anzeigefläche des Terminals nach Fig.1;
- Fig.3: Darstellung einer Datenverbindung von dem mobilen Lesegerät zu einer Datenbank nach Fig.1;
- Fig.4: Darstellung einer Datenverbindung von einer Datenbank zu dem mobilen Lesegerät nach Fig.1;
- Fig.5: einen Ablaufplan, zur Erläuterung der Arbeitsweise zur Anzeige von Maschineninformationen nach Fig.1 und Fig.5.
- Fig.6: eine schematische Darstellung einer erfindungsgemäßen Anzeigefläche zum Anzeigen von Maschineninformationen;
- Fig.7: eine Darstellung eines integrierten Lesegerätes in einem Terminal nach Fig.6;
- Fig.8: eine Darstellung einer Datenverbindung von einem Terminal zu einer Datenbank nach Fig.6;
- Fig.9: eine Darstellung einer Datenverbindung von einer Datenbank zu einem Terminal nach Fig.6;

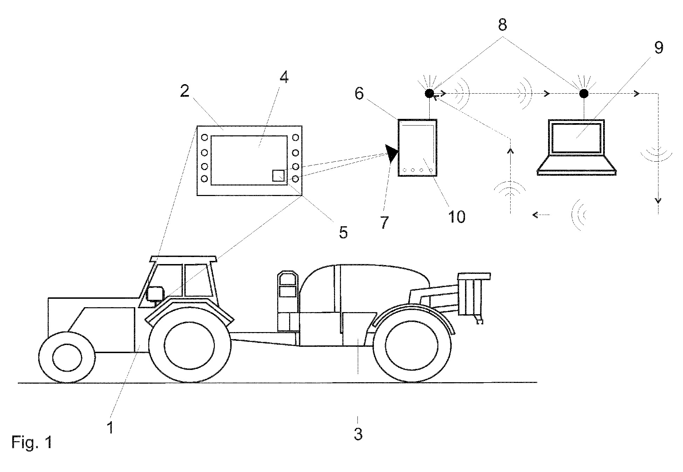

Der landwirtschaftliche Schlepper 1 in Fig.1 weist zumindest einen als Bordrechner ausgebildeten Terminal 2, welches eine Anzeigevorrichtung mit Anzeigefläche 4 auf. In dem Speicher des Bordrechners sind verschiedene Funktionen, wie unter anderem Einstell-, Mess-, Steuer- und/oder Regelfunktionen für den Schlepper, sowie für gezogene und angehängte Arbeitsgeräte 3 hinterlegt.

Tritt beispielsweise eine Abweichung zu den angegebenen Funktionen auf, erscheint automatisch auf der Anzeigefläche 4 des Terminals 2 eine Anzeigemaske mit einer Fehlermeldung. Diese Fehlermeldung beinhaltet neben vorzugsweise entsprechenden kurzen Maschineninformationen in Textform und/oder Grafikform ein Codemuster, zudem entsprechend weitergehende Maschineninformationen zu dem aufgetretenen Fehler an anderer Stelle hinterlegt sind. In diesem Ausführungsbeispiel ist das Codemuster als ein QR-Code 5 ausgestaltet. Mit einem Lesegerät, das in diesem Ausführungsbeispiel als Smartphone 6 ausgestaltet ist, wird der QR-Code durch eine in dem Smartphone 6 integrierte Kamera 7 fotografiert und zwischengespeichert. Ein Programm, welches in dem Speicher des Smartphone 6 hinterlegt ist, entschlüsselt den zuvor fotografierten QR-Code 5 und wandelt diesen in eine Text- und/oder Zahlenkombination um. Diese Text- und/oder Zahlenkombination beinhaltet in diesem Ausführungsbeispiel eine Internetadresse. Über eine Internetverbindung 8 wird das Smartphone 6 mit einer externen Datenbank 9 verknüpft und ruft die entschlüsselte Adresse auf, hinter der sich die weiterführenden Informationen zu dem aufgetretenen Fehler befinden. Bei entsprechend großer Speicherkapazität des Terminals 2 lassen sich diese Informationen auch aus einer internen Datenbank abrufen. Die erfassten Informationen werden über die Internetverbindung 9 zurück an das Smartphone 6 geleitet und auf dessen als Display ausgebildeten Anzeigefläche 10 dem Bediener in Textform und/oder Grafikform dargestellt, so dass er weitere Hinweise zu dem Fehler in lesbarer Form erhält. Auf diese Weise können auch weitere Maschineninformationen, wie beispielsweise Wartungsanleitungen, Bedienungsanleitungen, Einstellhinweise, etc., die einem QR-Code 5 hinterlegt sind oder hierüber abgerufen werden können, auf dem Terminal ausgewählt, durch eine Internetverbindung 8 von einer externen Datenbank 9 abgerufen und auf dem Smartphone 6 dargestellt werden.

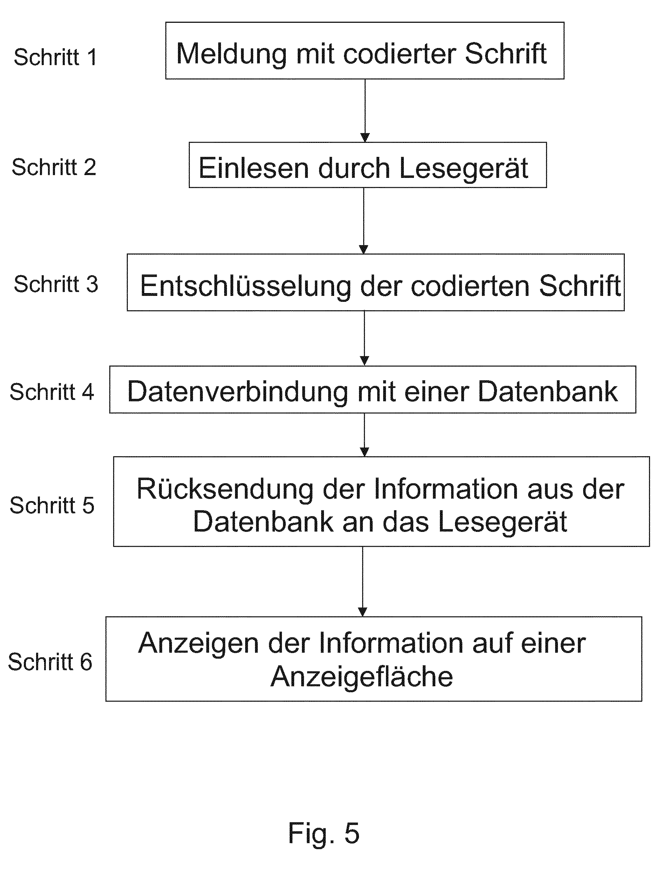

Der in Fig.5 dargestellte Ablaufplan zeigt die Abfolge der einzelnen Prozessschritte. Wird eine Meldung automatisch oder manuell erzeugt, wird in Schritt 1 eine Maske mit einem beinhalteten QR-Code erzeugt. In Schritt 2 wird der erzeugte QR-Code von einem Lesegerät erfasst und zwischengespeichert. Ein entsprechendes Programm entschlüsselt dann den QR-Code in Schritt 3 und stellt ihn als Text- und/oder Zahlenkombination in Form einer Internetadresse dar. In Schritt 4 wird eine Datenverbindung zu einer externen Datenbank hergestellt. In Schritt 5 werden die über die Internetadresse hinterlegten Maschineninformationen aus der Datenbank über die Datenverbindung an das Lesegerät zurückgesendet. Diese Informationen werden in Schritt 6 auf einer Anzeigefläche dem Bediener dargestellt.

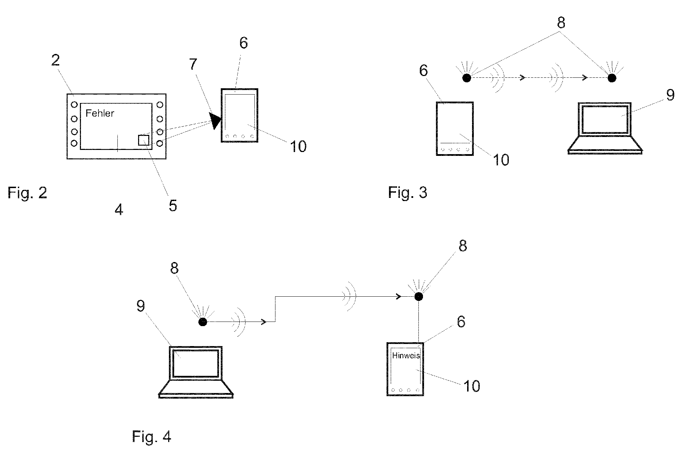

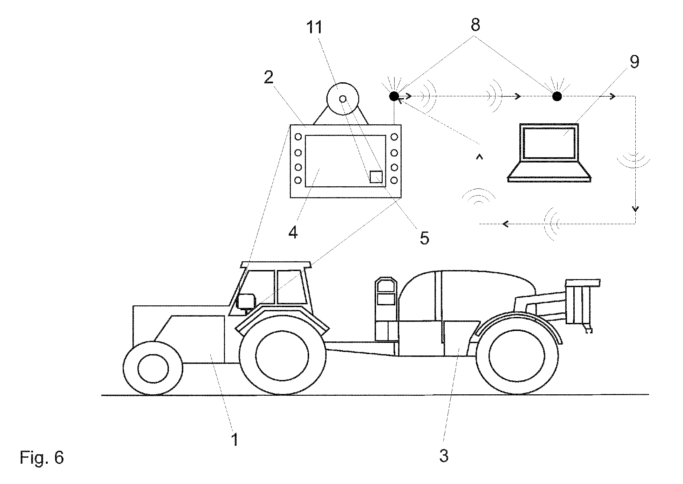

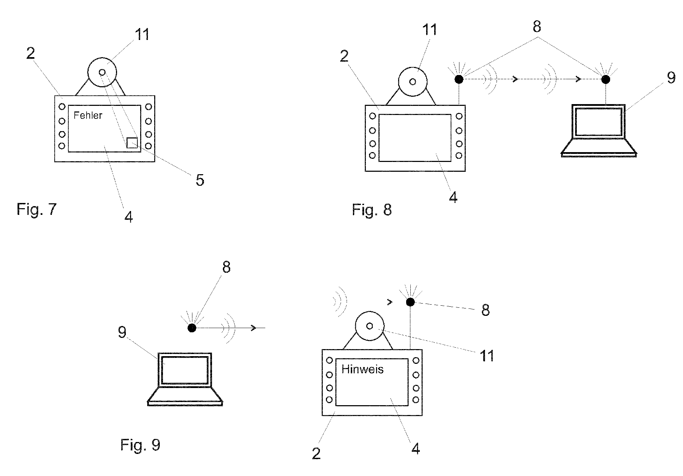

Eine weitere Ausgestaltung ist in den Fig.6 bis Fig.9 dargestellt. Hierbei sind die Vorgehensweise des zuvor beschriebenen Ablaufplanes Fig.5 und das Ausführungsbeispiel in Fig.1 bis Fig.4 ähnlich. Der Unterschied besteht darin, dass das Lesegerät 11 zum Auslesen des Codemusters in dem als Terminal 2 ausgebildeten Anzeigevorrichtung integriert ist und fortlaufend oder bei Erscheinen eines Codemusters die Anzeigefläche nach einem vorzugsweise als QR-Codes 5 ausgebildeten Codemuster absucht. Stellt das Lesegerät einen QR-Code 5 fest, wird dieser im Terminal 2 zwischengespeichert und durch ein entsprechend im Speicher hinterlegtes Programm entschlüsselt. Über eine Internetverbindung 8 zwischen dem Terminal 2 und einer externen Datenbank 9 werden die entschlüsselten Internetadressen aufgerufen. Die hinterlegten Maschineninformationen werden daraufhin über die Internetverbindung 8 an das Terminal 2 gesendet und auf dessen Anzeigefläche 4 für den Bediener in Text- und/oder Grafikform angezeigt.

## Patentansprüche

1. Anzeigevorrichtung mit zumindest einer Anzeigefläche zum Anzeigen von Maschineninformationen einer Maschine, insbesondere einer landwirtschaftlichen Arbeitsmaschine, welche bedarfsweise zumindest teilweise als kodierte und visuell lesbare Information automatisch oder manuell abgerufen wird und mittels einer Leseeinrichtung erkannt, ausgelesen und in verständlicher Weise auf einer Anzeigefläche angezeigt wird.

2. Anzeigevorrichtung nach zumindest einem der voranstehenden Ansprüche, **dadurch gekennzeichnet, dass** die Anzeigefläche ein anzeigefähiger Bildschirm eines Benutzerendgerätes, wie beispielsweise ein Terminal, etc., ist.

3. Anzeigevorrichtung nach zumindest einem der voranstehenden Ansprüche, **dadurch gekennzeichnet, dass** die kodierte und visuell lesbare Information als eine eindimensionale-und/oder zweidimensionale optoelektronisch lesbare Schrift, wie beispielsweise gestapelter Code, Matrix-Code, Punktcode, etc., ausgestaltet ist.

4. Anzeigevorrichtung nach zumindest einem der voranstehenden Ansprüche, **dadurch gekennzeichnet, dass** die kodierte und visuell lesbare Information ein QR-Code ist.

5. Anzeigevorrichtung nach zumindest einem der voranstehenden Ansprüche, **dadurch gekennzeichnet, dass** die Leseeinrichtung um ein mobiles Lesegerät, wie beispielsweise Smartphone, Tablet, Notebook, etc. oder integriert im Benutzerendgerät, wie beispielsweise ein Terminal, etc. ist.

6. Anzeigevorrichtung nach zumindest einem der voranstehenden Ansprüche, **dadurch gekennzeichnet, dass** die Leseeinrichtung eine optische Texterkennung und/oder Grafikerkennung, wie beispielsweise Kamera, Scanner, etc., für die kodierten und visuell lesbaren Informationen aufweist.

7. Anzeigevorrichtung nach zumindest einem der voranstehenden Ansprüche, **dadurch gekennzeichnet, dass** der Speicher der Leseeinrichtung ein Programm zur Auswertung der kodierten und visuell lesbaren Informationen aufweist, dass mittels des Programms die Codierung ausliest und die entsprechenden Daten in für den Anwender lesbarer Weise zur Verfügung gestellt und zur Anzeige gebracht wird.

8. Anzeigevorrichtung nach zumindest einem der voranstehenden Ansprüche, **dadurch gekennzeichnet, dass** die Leseeinrichtung eine Datenverbindung aufweist, um die aufgenommenen Daten zu senden und dann entsprechend der Codierung zurückgesendete Informationen empfängt.

9. Anzeigevorrichtung nach zumindest einem der voranstehenden Ansprüche, **dadurch gekennzeichnet, dass** die ausgewerteten Informationen mittels der Leseeinrichtung an eine Datenbank mit verknüpften Maschineninformationen, wie beispielsweise Hinweise zur Fehlerbehebung, Wartungsanleitung, Bedienungsanleitung, Einstellhinweise, etc., gesendet werden.

10. Anzeigevorrichtung nach zumindest einem der voranstehenden Ansprüche, **dadurch gekennzeichnet, dass** das Lesegerät zu der externen Datenbank auch über eine interne Datenbank verfügen kann.

11. Anzeigevorrichtung nach zumindest einem der voranstehenden Ansprüche, **dadurch gekennzeichnet, dass** die in der Datenbank mit der kodierte Information verknüpften Maschineninformationen an das Lesegerät gesendet werden.

12. Anzeigevorrichtung nach zumindest einem der voranstehenden Ansprüche, **dadurch gekennzeichnet, dass** die gesendeten Maschineninformationen auf der Leseeinrichtung und/oder Anzeigevorrichtung in Textform und/oder Grafikform dargestellt werden können.
